# EUROPEAN PATENT APPLICATION

(11) **EP 3 232 086 A1**
(43) Date of publication of application: **18.10.2017**
(21) Application number: 15867420.0
(22) Date of filing: 26.11.2015
(51) Int. Cl.: F16H 9/24, F16H 55/30

(54) **TRANSMISSION MECHANISM**

(30) Priority: 09.12.2014 JP 2014249400
(71) Applicant: Jatco Ltd., Shizuoka 417-8585 (JP)
(72) Inventor: TANGE, Hiroshi, Fuji-shi Shizuoka 417-8585 (JP)
(74) Representative: Grünecker Patent- und Rechtsanwälte PartG mbB
(86) International application number: PCT/JP2015/083150
(87) International publication number: WO 2016/093064

(57) **Abstract**

A transmission mechanism has a set of two composite sprockets, each having pinion sprockets (210) supported movably in a radial direction with respect to a rotation shaft 1 that inputs or outputs power and a movement mechanism radially moving the pinion sprockets (210) in synchronization with each other while maintaining equidistance of the pinion sprocket (210) from a shaft center (C₁) of the rotation shaft 1, and a chain wound around the two composite sprockets. Transmission ratio is changed by changing a circumcircle radius that is a radius of a circle encircling and circumscribing all the pinion sprockets (210). The pinion sprocket (210) is formed into a sector gear shape having a teeth portion (212) that is arranged along a circumference of a minimum radius circumcircle (A₁) and meshes with the chain. With this configuration, torque can surely be transmitted.

## Description

The present invention relates to a transmission mechanism that transmits power by a plurality of pinion sprockets, each of which is supported movably in a radial direction with equidistance of each pinion sprocket from a rotation shaft maintained and each of which revolves about an axis of the rotation shaft (so as to rotate integrally with the rotation shaft), and a chain wound around the pinion sprockets.

### Background Art

In recent years, a transmission in which a drive belt is wound around a primary pulley and a secondary pulley has been put to practical use. This transmission uses a frictional force that is generated between each pulley and the drive belt by thrust applied to a movable sheave of each pulley.

In a case of such transmission, it is required to secure the frictional force by increasing the thrust when transmitting great power. At this time, load of a driving source (an engine or an electric motor) for driving an oil pump that generates a hydraulic pressure for the thrust is increased, then this leads to increase in an energy consumption amount. Further, there is friction loss in a part where slip mechanically occurs between the pulley and the drive belt.

Therefore, there has been developed a transmission mechanism that transmits power by a plurality of pinion sprockets and a chain wound around the pinion sprockets without using the thrust and the frictional force.

Such a transmission mechanism is provided, at an input side and an output side thereof, with an apparent large sprocket (hereinafter, called a composite sprocket) formed by the plurality of pinion sprockets, each of which is supported movably in a radial direction with equidistance of each pinion sprocket from an axis of a rotation shaft maintained and each of which revolves about the axis of the rotation shaft so as to rotate integrally with each other and integrally with the rotation shaft and also each of which is arranged at an apex of a polygon. Then, by the chain wound around these composite sprockets, the power is transmitted.

This chain transmits the power by meshing with teeth provided on a circumference of the pinion sprocket.

For instance, Patent Document 1 has proposed a transmission mechanism in which two types of disks (two spindles) are arranged parallel to each other at axial direction end portion sides of a plurality of pinion sprockets which are provided in a circumferential direction, radial slots are formed on each disk, the radial slot (hereinafter, called a stationary radial slot or a stationary radial groove) on a stationary disk that rotates integrally with the rotation shaft and the radial slot (hereinafter, called a movable radial slot or a movable radial groove) on a movable disk that can rotate relative to the rotation shaft are arranged so as to intersect with each other when viewed from an axial direction, and the pinion sprocket is supported in a position where the stationary radial slot and the movable radial slot intersect. In this transmission mechanism, since the stationary radial slot is formed so as to lean or incline with respect to the radial direction and the movable radial slot is formed along the radial direction, the stationary radial slot and the movable radial slot intersect with each other when viewed from the axial direction.

When a relative angle (a relative phase) between the stationary disk and the movable disk is changed, since the intersection position of the stationary radial slot and the movable radial slot moves in a radial direction, each of the pinion sprockets which is supported in this intersection position moves in the radial direction by and according to the relative rotation of the both disks.

In this manner, by the fact that each of the pinion sprockets radially moves in synchronization with each other while maintaining their equidistance from the axis of the rotation shaft, a size of the polygon is changed as a similar shape. Then, by the fact that a radius of a circle (hereinafter, called a pinion circumcircle) that encircles all of the pinion sprockets and circumscribes all of the pinion sprockets is changed, a transmission ratio is changed.

In the transmission mechanism disclosed in Patent Document 1, however, since the large diameter composite sprocket is formed by gathering small diameter pinion sprockets (e.g. the number of teeth, meshing with the chain, of the pinion sprocket is small, and a size of tooth is small), a heavy load is imposed on each of the teeth of the small diameter pinion sprocket that meshes with the chain. Thus, as a risk, it might be difficult to transmit a large torque.

In addition, since a diameter of the pinion circumcircle is widened or reduced by moving the same pinion sprocket in the radial direction, a relationship of relative position between the chain and the pinion sprocke is changed depending on the diameter of the pinion circumcircle. Therefore, mesh of the chain and the pinion sprocket becomes unstable, then there is a risk that the torque cannot surely be transmitted.

### Citation List

### Patent Document

Patent Document 1 : US Patent No. 7713154

### Summary of the Invention

The present invention was made in view of the above technical problems. An object of the present invention is therefore to provide a transmission mechanism that is capable of surely transmitting the torque. The object of the present invention is not limited to the above. As the other object of the present invention, it is to provide a transmission mechanism that can bring about effects obtained by each configuration disclosed in "Embodiments for carrying out the Invention", which cannot be obtained from related arts.
(1) In order to achieve the above objects, a transmission mechanism that changes a transmission ratio, comprises: a set of two composite sprockets each having: a rotation shaft that inputs or outputs power; a plurality of pinion sprockets, each of which is supported movably in a radial direction with respect to the rotation shaft; and a movement mechanism that moves the plurality of pinion sprockets in the radial direction in synchronization with each other while maintaining equidistance of each of the pinion sprockets from a shaft center of the rotation shaft; and a chain wound around the set of two composite sprockets, the transmission ratio being changed by changing a circumcircle radius that is a radius of a circle that encircles all of the plurality of pinion sprockets and circumscribes all of the plurality of pinion sprockets. And the pinion sprocket is formed into a sector gear shape having a teeth portion that is arranged along a circumference of the circumcircle of a case where the circumcircle radius is aminimum and meshes with the chain.
(2) It is preferable that the movement mechanism has: a stationary disk on which a plurality of stationary radial slots are formed and which rotates integrally with the rotation shaft, the stationary radial slot being configured so that a supporting member of each of the pinion sprockets is inserted in the stationary radial slot and so that a position of the stationary radial slot is shifted to one side of a retarded angle side or an advanced angle side with respect to the radial direction as the stationary radial slot extends toward an outer circumference of the stationary disk; and a movable disk on which a plurality of movable radial slots are formed and which is arranged concentrically with the stationary disk and is rotatable with respect to the stationary disk, the movable radial slot being configured so that the supporting member of each of the pinion sprockets is positioned at an intersection position where the stationary radial slot and the movable radial slot intersect with each other when viewed from an axial direction, and the teeth portion has a first teethportion, at least one tooth of which is positioned in a slot width of the stationary radial slot, and a second teeth portion which extends from the first teeth portion to the one side of the retarded angle side or the advanced angle side.
(3) It is preferable that the stationary radial slot is formed linearly, and the second teeth portion extends, with respect to the first teeth portion, up to an area of a radial direction that passes through the shaft center of the rotation shaft and is parallel to a direction in which the stationary radial slot extends.
(4) It is preferable that the stationary radial slot is provided so that a position of the stationary radial slot is shifted to the retarded angle side with respect to the radial direction as the stationary radial slot extends toward the outer circumference of the stationary disk.
(5) It is preferable that the supporting member of each of the plurality of pinion sprockets is formed into such a shape that the supporting member contacts the stationary radial slot throughout a predetermined length in a radial direction of the supporting member.
(6) It is preferable that the transmission mechanism further comprises guide rods that guide the chain, and each of the guide rods has: a first guide rod that guides the chain all the time regardless of a size of the circumcircle radius; and a second guide rod that guides the chain at least when the circumcircle radius is a maximum, and is positioned at a radial direction inner side with respect to the first guide rod when the circumcircle radius is the minimum. That is, at least when the circumcircle radius is the maximum, a distance of the first guide rod from the shaft center of the rotation shaft and a distance of the second guide rod from the shaft center of the rotation shaft are equal to each other.
(7) It is preferable that the second guide rod is located in or around a space formed at a radial direction inner side of the second teeth portion when the circumcircle radius is the minimum.
(8) It is preferable that the first guide rod and the second guide rod are alternately arranged in a circumferential direction.

According to the transmission mechanism of the present invention, it is possible to achieve a stable mesh of teeth of the pinion sprocket and the chain, then the torque can surely be transmitted.

### Brief Description of Drawings

[Fig. 1]

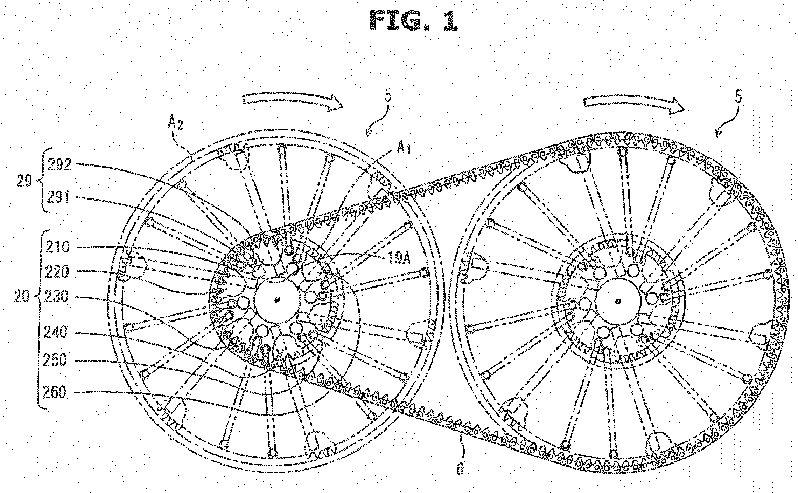

   Fig. 1 is a radial direction cross section (a vertically-cut cross section) schematically showing main parts of a transmission mechanism, focusing attention on a composite sprocket and a chain, according to an embodiment of the present invention.
[Fig. 2]

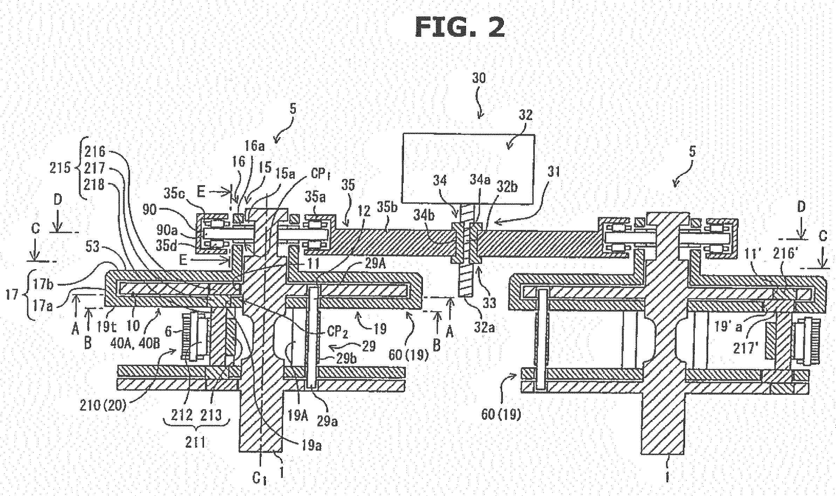

   Fig. 2 is a radial direction cross section (a horizontally-cut cross section) schematically showing main parts of the transmission mechanism, focusing attention on the composite sprocket and the chain, according to the embodiment of the present invention.
[Fig. 3]

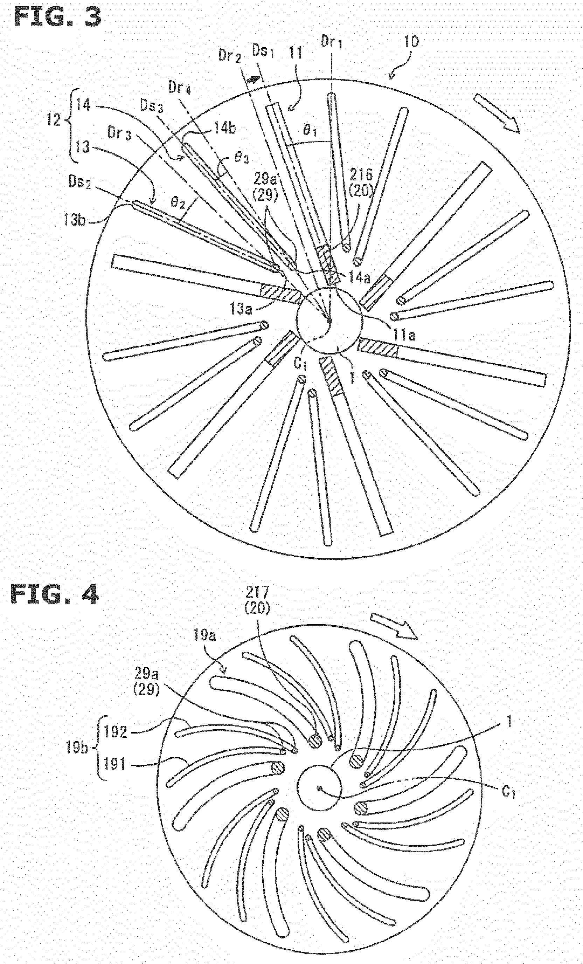

   Fig. 3 is a side view of a stationary disk, viewed from arrows A-A of Fig. 2, of the transmission mechanism according to the embodiment of the present invention.
[Fig. 4]
   Fig. 4 is a side view of a movable disk, viewed from arrows B-B of Fig. 2, of the transmission mechanism according to the embodiment of the present invention.
[Figs. 5A to 5C]

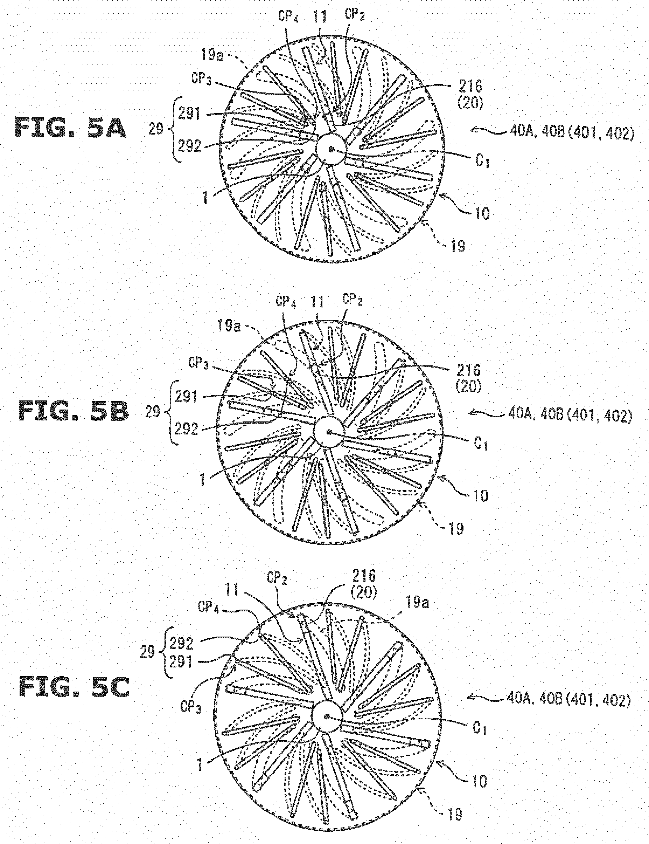

   Figs. 5A to 5C are drawings showing the stationary disk and the movable disk for radial direction movement of pinion sprockets etc. and the pinion sprockets and guide rods which are moved by these disks, according to the transmission mechanism of the embodiment of the present invention, and explaining a sprocket movement mechanism and a rod movement mechanism. A circumcircle radius becomes greater in order of Figs. 5A, 5B and 5C. Fig. 5A shows a case where the circumcircle radius is a minimum. Fig. 5C shows a case where the circumcircle radius is a maximum.
[Fig. 6]

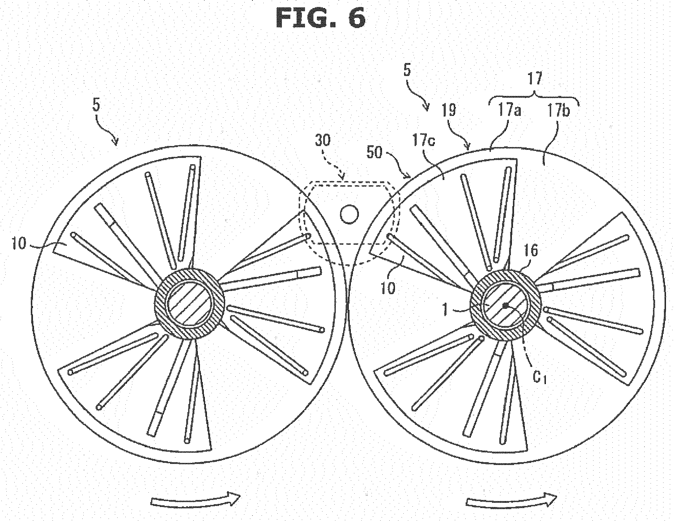

   Fig. 6 is a radial direction cross section of the transmission mechanism according to the embodiment of the present invention, which is viewed from arrows C-C of Fig. 2.
[Fig. 7]

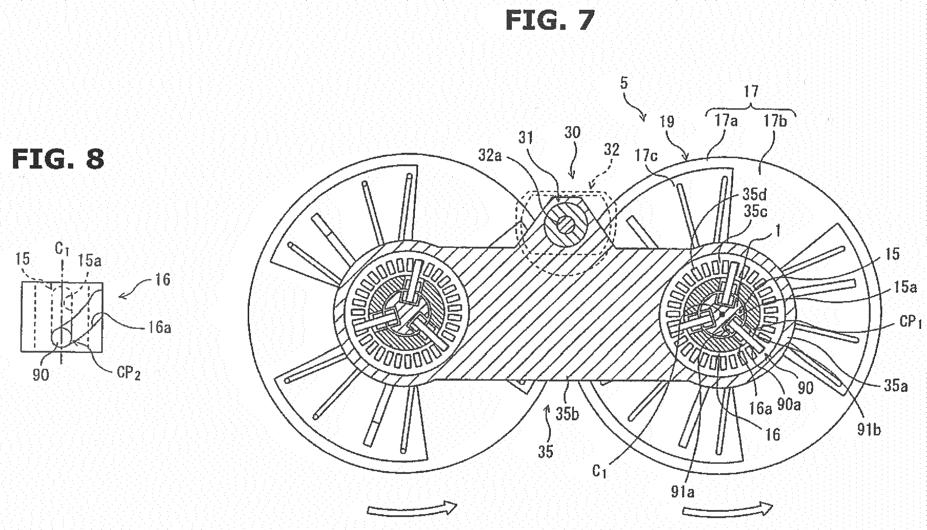

   Fig. 7 is a radial direction cross section of the transmission mechanism according to the embodiment of the present invention, which is viewed from arrows D-D of Fig. 2.
[Fig. 8]
   Fig. 8 is an enlarged view of main parts of a first cam groove and a second cam groove of the transmission mechanism according to the embodiment of the present invention, which is viewed from arrows E-E of Fig. 2.
[Fig. 9]

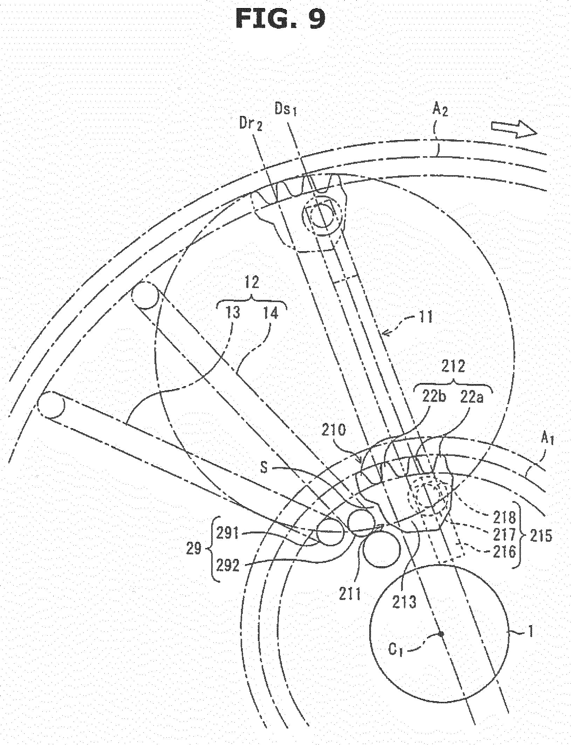

   Fig. 9 is an enlarged radial direction cross section (an enlarged vertically-cut cross section) schematically showing a main part of the transmission mechanism, focusing attention on the composite sprocket, according to the embodiment of the present invention.
[Fig. 10]

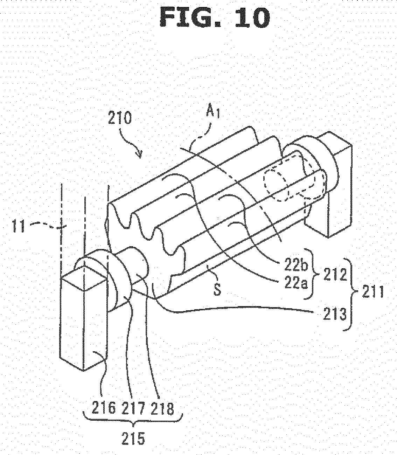

   Fig. 10 is a perspective view of one of the pinion sprockets of the transmission mechanism according to the embodiment of the present invention.

### Embodiments for carrying out the Invention

In the following description, embodiments of a transmission mechanism of the present invention will be explained with reference to the drawings. The transmission mechanism of the embodiments can be used for a transmission for a vehicle.

Here, in the embodiments, an axial direction is defined as a direction of an axis of a rotation shaft of the transmission mechanism or a direction parallel to this axis. A radial direction and a circumferential direction are each defined with the axis of the rotation shaft being a reference. An inner side in the radial direction means a short side whose distance (radius) from the axis of the rotation shaft is shorter, while an outer side in the radial direction means a long side whose distance (radius) from the axis of the rotation shaft is longer. Further, an advanced angle side and a retarded angle side are defined with a revolution direction in the transmission mechanism being a reference.

### [I. Embodiment]

A transmission mechanism according to an embodiment will be explained below.

### [1. Configuration]

As shown in Fig. 1, the transmission mechanism has a set of two composite sprockets 5, 5 and a chain 6 wound around these composite sprockets 5, 5. Although a silent chain is shown here as the chain 6, a roller chain can be used as the chain 6. In Fig. 1, an open arrow indicates a revolution direction.

One of the set of two composite sprockets 5, 5 is a composite sprocket 5 (shown on a left side in Fig. 1) rotating concentrically and integrally with an input side rotation shaft 1 (an input shaft or an input axis), and the other is a composite sprocket 5 (shown on a right side in Fig. 1) rotating concentrically and integrally with an output side rotation shaft 1 (an output shaft or an output axis). Since these composite sprockets 5, 5 have the same configuration, the input side composite sprocket 5 is focused here, and its configuration will be explained in the following description.

The composite sprocket 5 means an apparent large sprocket formed by a plurality of pinion sprockets 20 and a plurality of guide rods 29, each of which is arranged at an apex of a polygon (here, an octadodecagon). This composite sprocket 5 has the rotation shaft (the rotation axis) 1, the pinion sprockets 20 and the guide rods 29, each of which is supported movably in a radial direction with respect to the rotation shaft 1. More specifically, six pinion sprockets 20 are arranged at regular intervals along a circumferential direction on a circumference of a circle whose center is a shaft center C₁ of the rotation shaft 1. Between adjacent pinion sprockets 20, two guide rods 29 are disposed.

A transmission ratio of the transmission mechanism is changed by changing (widening or reducing) an outside diameter of the apparent large sprocket formed by the pinion sprockets 20 and the guide rods 29, each of which is arranged at the apex of the polygon, i.e. an outside diameter of the composite sprocket 5. Since this transmission mechanism can continuously change the transmission ratio, this transmission mechanism can be configured as a continuously variable transmission mechanism. On the other hand, this transmission mechanism can be configured as a multi-range transmission mechanism by stepwise change of the transmission ratio.

The outside diameter of the composite sprocket 5 corresponds to a radius of a circle (hereinafter, called a pinion circumcircle A) that encircles all of the plurality of pinion sprockets 20 and circumscribes all of the plurality of pinion sprockets 20. That is, a diameter of the pinion circumcircle A is the outside diameter of the composite sprocket 5.

A radius of the pinion circumcircle A also corresponds to a contact radius of the plurality of pinion sprockets 20 and the chain 6, namely, a radius of a pitch circle of the composite sprocket 5. Therefore, in the transmission mechanism, by changing the radius of the pinion circumcircle A, a winding radius of the chain 6 is changed, and the transmission ratio is changed.

Fig. 1 shows, as an example, a case where the pinion circumcircle A on the input side is a minimum, and the pinion circumcircle A on the output side is a maximum. In the following explanation, the minimum pinion circumcircle A is called a minimum pinion circumcircle A₁, and the maximum pinion circumcircle A is called a maximum pinion circumcircle A₂. Further, in a case where no attention is focused on a size or a length of the pinion circumcircle A, it is simply called the pinion circumcircle A.

The composite sprocket 5 has a relative rotation drive mechanism 30 that drives relative rotation of a movable disk 19 with respect to a stationary disk 10, a sprocket movement mechanism 40A that moves the plurality of pinion sprockets 20 and a rod movement mechanism 40B that moves the plurality of guide rods 29, although these mechanisms are not shown in Fig. 1. Detailed explanation of these mechanisms will be described later.

The composite sprocket 5 of the transmission mechanism will be explained below.

In the following explanation of configuration of the composite sprocket 5, each configuration or structure of basic elements will be explained in order of the stationary disk 10 rotating integrally with the rotation shaft 1, the movable disk 19 provided rotatably relative to the stationary disk 10, a first rotation portion 15 rotating integrally with the stationary disk 10, a second rotation portion 16 rotating integrally with the movable disk 19, the pinion sprocket 20 meshing with the chain 6 and the guide rod 29 guiding the chain 6. Subsequently, as mechanisms for operating the basic elements, the relative rotation drive mechanism 30, the sprocket movement mechanism 40A and the rod movement mechanism 40B will be explained in this order.

The stationary disk 10, the movable disk 19, the first rotation portion 15 and the second rotation portion 16 are arranged concentrically with the shaft center C₁ of the rotation shaft 1. A radial direction of each of the stationary disk 10 and the movable disk 19 is identical with a radial direction of the rotation shaft 1.

In the present embodiment, as shown in Fig. 2, the stationary disks 10 and the movable disks 19 are disposed with these disks 10 and 19 being adjacent to each other at axial direction both end sides of the rotation shaft 1 (at upper and lower end sides in Fig. 2). The pinion sprockets 20, the guide rods 29 and the chain 6 wound around these pinion sprockets 20 and guide rods 29 are disposed in an axial direction middle portion of the rotation shaft 1. Further, the movable disk 19 is arranged on an axial direction inner side with respect to the stationary disk 10, i.e. on a side close to the pinion sprockets 20, the guide rods 29 and the chain 6.

In Fig. 2, for easy understanding, the configuration is schematically shown, and the pinion sprockets 20, the guide rods 29 and after-mentioned relative rotation drive mechanism 30 are shown on a same cross section with a space provided between the input side composite sprocket 5 and the output side composite sprocket 5.

### [1-1. Stationary disk and Movable disk]

Each of the stationary disk 10 and the movable disk 19 is provided, as a pair of disks, at axial direction both end portions of the plurality of pinion sprockets 20 and the plurality of guide rods 29. Thus, the stationary disk 10 and the movable disk 19 at the one side are focused here, and their configurations will be explained.

### [1-1-1. Stationary disk]

The stationary disk 10 is formed integrally with the rotation shaft 1, or is connected to the rotation shaft 1 so as to rotate integrally with the rotation shaft 1.

As shown in Fig. 3, two types of stationary radial slots (or grooves) of a plurality of sprocket stationary radial slots 11 (only one slot is denoted by a reference sign 11) provided for the plurality of pinion sprockets 20 and a plurality of rod stationary radial slots 12 (only one slot is denoted by a reference sign 12) provided for the plurality of guide rods 29 are formed at the stationary disk 10. Here, in Fig. 3, an open arrow indicates the revolution direction.

The sprocket stationary radial slot 11 is a slot or a groove for guiding the corresponding pinion sprocket 20. That is, the sprocket stationary radial slot 11 is formed along a radial direction movement path of the corresponding pinion sprocket 20.

The sprocket stationary radial slots 11 have the same configuration or structure except that their arrangement positions are different. Thus, one of the sprocket stationary radial slots 11 is focused here, and its configuration will be explained in the following description.

A first supporting portion 216 of the pinion sprocket 20 is inserted or fitted in the sprocket stationary radial slot 11. The sprocket stationary radial slot 11 is provided so as to lean or incline to a retarded angle side with respect to a first radial direction Dᵣ₁ of the stationary disk 10. That is, the sprocket stationary radial slot 11 is provided so that its position is shifted to the retarded angle side with respect to the first radial direction Dᵣ₁ as the sprocket stationary radial slot 11 extends toward an outer circumference (a radial direction outer side) of the stationary disk 10. The first radial direction Dᵣ₁ means a radial direction passing through an inner circumferential endportion 11a of the sprocket stationary radial slot 11. Therefore, a direction Dₛ₁ in which the sprocket stationary radial slot 11 extends leans or inclines to the retarded angle side with respect to the first radial direction Dᵣ₁ at a first inclination angle θ₁.

In the present embodiment, the sprocket stationary radial slot 11 is formed linearly. Thus, a second radial direction Dᵣ₂, which is parallel to the direction Dₛ₁ in which the sprocket stationary radial slot 11 extends, exists at a retarded angle side with respect to the sprocket stationary radial slot 11. Conversely, when parallel moving (shifting) the second radial direction Dᵣ₂ to an advanced angle side as shown by a bold arrow, the second radial direction Dᵣ₂ is identical with the direction Dₛ₁ in which the sprocket stationary radial slot 11 extends. Here, the second radial direction Dᵣ₂ indicates a direction passing through the shaft center C₁ of the rotation shaft 1.

A rod supporting shaft 29a of the guide rod 29 is inserted or fitted in the corresponding rod stationary radial slot 12. The rod stationary radial slot 12 is a slot or a groove for guiding the corresponding guide rod 29. That is, the rod stationary radial slot 12 is formed along a radial direction movement path of the corresponding guide rod 29.

The rod stationary radial slot 12 is broadly divided into two types of slots of a first rod stationary radial slot 13 (only one slot is denoted by a reference sign 13) and a second rod stationary radial slot 14 (only one slot is denoted by a reference sign 14). A distance of an inner circumferential end portion 13a of the first rod stationary radial slot 13 from the shaft center C₁ of the rotation shaft 1 is longer than that of an inner circumferential end portion 14a of the second rod stationary radial slot 14. That is, the inner circumferential end portion 13a of the first rod stationary radial slot 13 is located at a radial direction outer side with respect to the inner circumferential end portion 14a of the second rod stationary radial slot 14. On the other hand, a distance of an outer circumferential end portion 13b of the first rod stationary radial slot 13 from the shaft center C₁ of the rotation shaft 1 is equal to that of an outer circumferential end portion 14b of the second rod stationary radial slot 14.

In the present embodiment, in the same manner as the sprocket stationary radial slot 11, the rod stationary radial slot 12 is formed linearly. And, the rod stationary radial slot 12 is provided so that its position is shifted to the retarded angle side with respect to the radial direction as the rod stationary radial slot 12 extends toward the radial direction outer side of the stationary disk 10.

More specifically, a direction Dₛ₂ in which the first rod stationary radial slot 13 extends leans or inclines to the retarded angle side with respect to a third radial direction Dᵣ₃ at a second inclination angle θ₂. The third radial direction Dᵣ₃ means a radial direction passing through the inner circumferential end portion 13a of the first rod stationary radial slot 13. A direction Dₛ₃ in which the second rod stationary radial slot 14 extends leans or inclines to the retarded angle side with respect to a fourth radial direction Dᵣ₄ at a third inclination angle θ₃. The fourth radial direction Dᵣ₄ means a radial direction passing through the inner circumferential end portion 14a of the second rod stationary radial slot 14. The second inclination angle θ₂ of the first rod stationary radial slot 13 is greater than the third inclination angle θ₃ of the second rod stationary radial slot 14. Therefore, the second rod stationary radial slot 14 is formed along the radial direction as compared with the first rod stationary radial slot 13.

Fig. 3 shows an example in which two slots of the first rod stationary radial slot 13 and the second rod stationary radial slot 14 are formed between two sprocket stationary radial slots 11 in a circumferential direction.

The first rod stationary radial slots 13 have the same configuration or structure except that their arrangement positions are different. The second rod stationary radial slots 14 have the same configuration or structure except that their arrangement positions are different. In the following explanation, in a case where these rod stationary radial slots 13 and 14 are not particularly differentiated, they are called the rod stationary radial slot 12.

The stationary radial slots 11 and 12 have respective slot widths corresponding to outside diameters of members inserted in the stationary radial slots 11 and 12. More specifically, each slot width is set to be slightly greater than the outside diameter of the inserted member. Therefore, the inserted member can move smoothly along the respective stationary radial slots 11 and 12. Detailed explanations of the first supporting portion 216 and the rod supporting shaft 2 9a which are the inserted members will be described later.

### [1-1-2. Movable disk]

As shown in Fig. 2, the movable disk 19 is provided at one side and the other side of each pinion sprocket 20 and each guide rod 29 with the pinion sprockets 20 and the guide rods 29 sandwiched between the movable disks 19. These movable disks 19 are connected with each other by connecting shafts 19A. As shown in Fig. 1, the connecting shafts 19A (only one connecting shaft is denoted by a reference sign 19A) are provided between the pinion sprockets 20. With this structure, one side movable disk 19 and the other side movable disk 19 rotate integrally with each other.

As shown in Figs. 4 and 5A to 5C, a plurality of movable radial slots (or grooves) 19a and 19b (shown by a broken line in Figs. 5A to 5C, only each one slot is denoted by a reference sign 19a or 19b), which intersect with the stationary radial slots 11 and 12 respectively when viewed from an axial direction, are formed on the movable disk 19 (shown by a broken line in Figs. 5A to 5C). Here, although an outside shape of the movable disk 19 is a circular shape and is identical with and overlaps an outside shape (a circular shape) of the stationary disk 10 when viewed from the axial direction, for the sake of convenience, the circular outside shape of the movable disk 19 is shown with its size reduced in Figs. 5A to 5C. In Fig. 4, an open arrow indicates the revolution direction.

The sprocket movable radial slots 19a intersect with the corresponding sprocket stationary radial slots 11 when viewed from the axial direction.

As shown in Fig. 4, a second supporting portion 217 of the pinion sprocket 20 is inserted or fitted in the sprocket movable radial slot 19a. In the present embodiment, the sprocket movable radial slot 19a is provided so as to lean or incline to a retarded angle side with respect to a radial direction of the movable disk 19, and has a curved-shape.

The rod supporting shaft 29a of the guide rod 29 is inserted or fitted in the rod movable radial slot 19b. The rod movable radial slots 19b intersect with the corresponding rod stationary radial slots 12 when viewed from the axial direction. The rod movable radial slot 19b is broadly divided into two types of slots of a first rod movable radial slot 191 intersecting with the first rod stationary radial slot 13 when viewed from the axial direction and a second rod movable radial slot 192 intersecting with the second rod stationary radial slot 14 when viewed from the axial direction.

In the same manner as the rod stationary radial slot 12, a distance of an inner circumferential end portion of the first rod movable radial slot 191 from the shaft center C₁ of the rotation shaft 1 is longer than that of an inner circumferential end portion of the second rod movable radial slot 192. On the other hand, a distance of an outer circumferential end portion of the first rod movable radial slot 191 from the shaft center C₁ of the rotation shaft 1 is equal to that of an outer circumferential end portion of the second rod movable radial slot 192.

The movable radial slots 19a and 19b have respective slot widths corresponding to outside diameters of members inserted in the movable radial slots 19a and 19b. More specifically, each slot width is set to be slightly greater than the outside diameter of the inserted member. Therefore, the inserted member can move smoothly along the respective movable radial slots 19a and 19b. Detailed explanations of the second supporting portion 217 and the rod supporting shaft 29a which are the inserted members will be described later.

### [1-2. First rotation portion]

As shown in Fig. 2, the first rotation portion 15 is a portion that rotates integrally with the stationary disk 10, i.e. rotates integrally with the rotation shaft 1. The first rotation portion 15 is provided at a part of the rotation shaft 1. The first rotation portion 15 is located at an axial direction outer side with respect to the stationary disk 10 and the movable disk 19.

As shown in Figs. 2, 7 and 8, the first rotation portion 15 is provided with a first cam groove 15a. This first cam groove 15a is formed into a recessed shape along an axial direction of the rotation shaft 1. The first cam groove 15a is formed parallel to the shaft center C₁ of the rotation shaft 1. Fig. 7 shows, as an example, a case where three first cam grooves 15a (only one first cam groove is denoted by a reference sign 15a) are provided in three positions in a circumferential direction with these first cam grooves 15a spaced apart from each other. However, a place where the first cam groove 15a is formed and the number of the first cam groove 15a could be set according to a structure close to the first cam groove 15a or specifications, and different shapes and various number of the first cam groove 15a can be applied. In Fig. 7, an open arrow indicates the revolution direction.

### [1-3. Second rotation portion]

As shown in Figs. 2, 6 and 7, the second rotation portion 16 is joined to the movable disk 19 through a joining portion 17. Here, in Fig. 6, an open arrow indicates the revolution direction.

First, the joining portion 17 will be explained.

The joining portion 17 is formed and arranged so as to rotate integrally with the movable disk 19 and the second rotation portion 16 and cover the stationary disk 10. The joining portion 17 has an axial direction joining portion 17a that covers an outer circumference of the stationary disk 10 and a radial direction joining portion 17b that covers axial direction outer sides of the stationary disk 10.

A joining portion joining a separating portion or component in an axial direction between the movable disk 19 and the second rotation portion 16 is the axial direction joining portion 17a of the joining portion 17, while a joining portion joining a separating portion or component in a radial direction between the movable disk 19 and the second rotation portion 16 is the radial direction joining portion 17b of the joining portion 17.

The axial direction joining portion 17a is formed concentrically with the shaft center C₁ of the rotation shaft 1, and has a cylindrical shape that extends in the axial direction of the rotation shaft 1. As shown in Fig. 2, an axial direction inner side of the axial direction joining portion 17a is joined to an outer peripheral end (an outer peripheral portion) 19t of the movable disk 19, and an axial direction outer side of the axial direction joining portion 17a is joined to the radial direction joining portion 17b that will be explained next.

A radial direction outer side of the radial direction joining portion 17b is joined to the axial direction joining portion 17a, and a radial direction inner side of the radial direction joining portion 17b is joined to the second rotation portion 16. The radial direction joining portion 17b is formed concentrically with the shaft center C₁ of the rotation shaft 1, and has a disk shape expanding in the radial direction and having opening sections 17c that will be explained next.

As shown in Figs. 6 and 7, the opening sections 17c are provided in the radial direction joining portion 17b. In the present embodiment, as an example, a case where three fan-shaped or sector opening sections 17c are arranged in three positions at regular intervals with the radial direction joining portion 17b being present between adjacent opening sections 17c. However, a shape and the number of the opening section 17c could be set according to a structure close to the opening section 17c or specifications, and different shapes and various number of the opening section 17c can be applied. Here, the opening section 17c could be omitted, and omitted, and the radial direction joining portion 17b could be formed into a disk shape.

Next, the second rotation portion 16 will be explained with reference to Figs. 2, 6 to 8.

The second rotation portion 16 is provided so as to be joined to the outer peripheral end 19t of the movable disk 19 through the joining portions 17a and 17b and cover an outer periphery close to the first rotation portion 15. The second rotation port ion 16 has a cylindrical shape that is concentric with the shaft center C₁ of the rotation shaft 1.

The second rotation portion 16 is provided with a second cam groove 16a. This second cam groove 16a is formed so as to adjoin the outer periphery of the first cam groove 15a, and also the second cam groove 16a is provided along the rotation shaft 1. The second cam groove 16a intersects with the first cam groove 15a when viewed from a radial direction. Further, the second cam groove 16a is provided so as to intersect with the rotation shaft 1 in the axial direction of the rotation shaft 1.

Fig. 7 shows, as an example, a case where the second cam grooves 16a (only one second cam groove is denoted by a reference sign 16a) are provided in three positions. However, a place where the second cam groove 16a is formed and the number of the second cam groove 16a are set according to those of the first rotation portion 15.

### [1-4. Pinion sprocket and Guide rod]

As shown in Fig. 1, the pinion sprockets 20 and the guide rods 29 are configured to revolve about the shaft center C₁ of the rotation shaft 1. Here, "revolve (revolution)" means that each pinion sprocket 20 and each guide rod 29 revolve with the shaft center C₁ of the rotation shaft 1 being a center. When the rotation shaft 1 rotates, each pinion sprocket 20 and each guide rod 29 revolve in concert with this rotation of the rotation shaft 1. That is, the number of rotation (a rotation speed) of the rotation shaft 1 and the number of revolution (a revolution speed) of the pinion sprocket 20 and the number of revolution (a revolution speed) of the guide rod 29 are equal to each other.

These pinion sprocket 20 and guide rod 29 only revolute, and do not rotate. Here, "rotate (rotation)" means that each pinion sprocket 20 and each guide rod 29 rotate on their axes (each pinion sprocket 20 and each guide rod 29 rotate with their axes being centers).

### [1-4-1. Pinion sprocket]

The pinion sprockets 20 are arranged at regular intervals along a circumferential direction on a circumference of a circle whose center is the shaft center C₁ of the rotation shaft 1. More specifically, a first pinion sprocket 210, a second pinion sprocket 220, a third pinion sprocket 230, a fourth pinion sprocket 240, a fifth pinion sprocket 250 and a sixth pinion sprocket 260 are arranged. These pinion sprockets 210, 220, 230, 240, 250 and 260 have the same configuration or structure except that their arrangement positions are different.

In the following explanation, the pinion sprockets 210, 220, 230, 240, 250 and 260 are simply called the pinion sprocket 20. Further, the first pinion sprocket 210 is focused, and its configuration will be explained.

Fig. 2 shows, as an example, a case where a row of the pinion sprocket 210 is provided in the axial direction. However, the number of rows of the pinion sprocket 210 could be changed according to magnitude of transmission torque of the transmission mechanism.

The first pinion sprocket 210 has a body 211 and a supporting member 215.

The body 211 has a teeth portion 212 and a base portion 213.

The teeth portion 212 is provided at a radial direction outer side of the base portion 213, and meshes with the chain 6.

As shown in Figs. 9 and 10, the teeth portion 212 has a plurality of teeth (here, four teeth). That is, the teeth portion 212 of the first pinion sprocket 210 is not provided throughout an entire circumference of the teeth portion 212, but provided at a part of the teeth portion 212. The teeth portion 212 is formed into a sector gear shape (sector teeth shape). This teeth portion 212 is provided along a circumference of the minimum pinion circumcircle A₁. More specifically, in a state of the minimum pinion circumcircle A₁, a tip end (an outer circumferential end) of each tooth of the teeth portion 212 touches the minimum pinion circumcircle A₁.

The teeth portion 212 is broadly divided into two portions of a first teeth portion 22a and a second teeth portion 22b.

The first teeth portion 22a is provided so that at least one tooth of the first teeth portion 22a is positioned in a slot width of the sprocket stationary radial slot 11. That is, at least one tooth of the first teeth portion 22a overlaps the slot or groove of the sprocket stationary radial slot 11 when viewed from the axial direction. In the present embodiment, two teeth at an advanced angle side of the teeth portion 212 correspond to the first teeth portion 22a.

The second teeth portion 22b is a member that extends from the first teeth portion 22a to a retarded angle side. This second teeth portion 22b extends, with respect to the first teeth portion 22a, up to an area of the second radial direction Dᵣ₂ that is parallel to the direction Dₛ₁ in which the sprocket stationary radial slot 11 extends. That is, the second teeth portion 22b extends so that the second teeth portion 22b is offset from the first teeth portion 22a more than a distance between the direction Dₛ₁ in which the sprocket stationary radial slot 11 extends and the second radial direction Dᵣ₂ that is parallel to the direction Dₛ₁. In the present embodiment, two teeth at a retarded angle side of the teeth portion 212 correspond to the second teeth portion 22b.

The base portion 213 has such shape that a radial direction inner side of the second teeth portion 22b is cut. In other words, a space S is formed at the radial direction inner side of the second teeth portion 22b, which is a retarded angle side of the base portion 213. This base portion 213 is supported by the supporting member 215 that will be explained next.

As shown in Figs. 2, 9 and 10, the supporting member 215 has the first supporting portion 216, the second supporting portion 217 and a third supporting portion 218 from an axial direction end portion. The supporting member 215 is provided at both sides of the first pinion sprocket 210. The first supporting portion 216 and the second supporting portion 217 are connected together, and the second supporting portion 217 and the third supporting portion 218 are connected together. Here, in Fig. 9, an open arrow indicates the revolution direction.

As mentioned above, the first supporting portion 216 is inserted or fitted in the sprocket stationary radial slot 11. That is, an axial direction position of the first supporting portion 216 and an axial direction position of the stationary disk 10 are the same. This first supporting portion 216 is formed into such a shape that the first supporting portion 216 contacts the sprocket stationary radial slot 11 throughout a predetermined length in the radial direction of the first supporting portion 216. Therefore, when a rotation force that attempts to rotate the first pinion sprocket 210 acts on the first pinion sprocket 210, the first supporting portion 216 avoids the rotation of the first pinion sprocket 210 by reaction (counteraction) against this rotation force while transmitting the rotation force to the sprocket stationary radial slot 11.

That is, the first supporting portion 216 is formed into a shape having a rotation-stop function in the sprocket stationary radial slot 11. Here, the "predetermined length" of the first supporting portion 216 means a length by which counteraction against the rotation force attempting to rotate the first pinion sprocket 210 can be secured.

In the present embodiment, a longitudinal direction of the first supporting portion 216 extends along the radial direction. For instance, the first supporting portion 216 is shaped into a rectangular parallelepiped key shape. Thus, the sprocket stationary radial slot 11 could be called a key slot (or a key groove). During transmission of a driving torque, the driving torque is transmitted from an inner wall of the sprocket stationary radial slot 11 toward the first supporting portion 216. In other words , a reaction force against the driving torque (a rotation reaction force against a driving force) acts on the first supporting portion 216 and the inner wall of the sprocket stationary radial slot 11.

If the first supporting portion 216 is provided with a bearing at a side wall of the first supporting portion 216, which contacts the inner wall of the sprocket stationary radial slot 11, especially on four corners of the first supporting portion 216, a smooth radial direction movement of the first supporting portion 216 can be secured.

As mentioned above, the second supporting portion 217 is inserted or fitted in the sprocket movable radial slot 19a. That is, an axial direction position of the second supporting portion 217 and an axial direction position of the movable disk 19 are the same. The second supporting portion 217 is formed into a cylindrical shape.

The third supporting portion 218 is connected to the base portion 213. In other words, the third supporting portion 218 supports the first pinion sprocket 210 so as to forbid a relative rotation of the first pinion sprocket 210. In the present embodiment, as an example, the third supporting portion 218 is formed into a cylindrical shape whose diameter is smaller than that of the second supporting portion 217.

As shown in Fig. 2, regarding the output side composite sprocket 5, a sprocket stationary radial slot 11' has a curved-shape like the above mentioned sprocket movable radial slot 19a. And, a shape of a first supporting portion 216' inserted or fitted in this sprocket stationary radial slot 11' corresponds to a shape of the sprocket stationary radial slot 11'. As this first supporting portion 216', a supporting portion formed into a cylindrical shape like the second supporting portion 217 can be used. In addition, a supporting portion whose longitudinal direction is formed along the sprocket stationary radial slot 11' could be used.

Further, regarding the output side composite sprocket 5, a sprocket movable radial slot 19' a is formed linearly, like the above mentioned sprocket stationary radial slot 11. And, a shape of a second supporting portion 217' inserted or fitted in this sprocket movable radial slot 19' a corresponds to a shape of the sprocket movable radial slot 19'a. For instance, the second supporting portion 217' is shaped into a rectangular parallelepiped shape (a key shape) whose longitudinal direction is the radial direction. In this output side composite sprocket 5, the driving torque and the reaction force against the driving torque act on the sprocket movable radial slot 19'a and the second supporting portion 217'.

### [1-4-2. Guide rod]

As shown in Fig. 1, the plurality of guide rods 29 are elements that guide the chain 6 so as to make variation (variation of the winding radius of the chain 6) in a distance between the chain 6 and the shaft center C₁ of the rotation shaft 1 smaller, i.e. so as to bring an orbit or a path of the chain 6 around the rotation shaft 1 closer to as circular a path as possible. These guide rods 29 are provided movably in the radial direction, and form apexes of a polygon with the chain 6 wound around the guide rods 29. Unlike the pinion sprocket, the guide rod 29 does not mesh with the chain 6, and does not contribute transmission of the torque.

The guide rod 29 is broadly divided into two guide rods of a first guide rod 291 (only one guide rod is denoted by a reference sign 291) and a second guide rod 292 (only one guide rod is denoted by a reference sign 292).

The first guide rods 291 have the same configuration or structure except that their arrangement positions are different. The second guide rods 292 have the same configuration or structure except that their arrangement positions are different. In the following explanation, in a case where these guide rods 291 and 292 are not particularly differentiated, they are called the guide rod 29.

As shown in Fig. 2, each guide rod 29 is formed by fitting a cylindrical guide member 29b onto an outer circumference of the rod supporting shaft 29a. The guide rod 29 is supported by the rod supporting shaft 29a, and guides the chain 6 by an outer circumferential surface of the guide member 29b.

The rod supporting shaft 29a of axial direction both end portions 29A (only one end portion is denoted by a reference sign 29A) of the guide rod 29 protrudes from the guide member 29b in the axial direction. This protruding rod supporting shaft 29a is supported by the stationary disk 10 and the movable disk 19.

That is, the guide rod 29 has the rod supporting shaft 29a and the cylindrical guide member 29b partly fitted onto the outer circumference of the rod supporting shaft 29a at an axial direction position where the guide rod 29 contacts the chain 6.

As shown in Figs. 5A to 5C and 9, the first guide rod 291 guides the chain 6 all the time regardless of a radial direction position of the first guide rod 291 (regardless of a size of the radius of the pinion circumcircle A). In contrast to this, the second guide rod 292 does not guide the chain 6 in a state of the minimum pinion circumcircle A₁ and its vicinity, but guides the chain 6 in a state of the maximum pinion circumcircle A₂ together with the first guide rod 291. That is, in the state of the maximum pinion circumcircle A₂, both rods of the guide rod 29 guide the chain 6.

In other words, when focusing attention on relative radial direction positions of these guide rods 291and292, in the state of the minimum pinion circumcircle A₁ and its vicinity, the second guide rod 292 is positioned at a radial direction inner side with respect to the first guide rod 291. On the other hand, in the state of the maximum pinion circumcircle A₂, a distance of the first guide rod 291 from the shaft center C₁ of the rotation shaft 1 and a distance of the second guide rod 292 from the shaft center C₁ of the rotation shaft 1 are equal to each other.

As shown in Fig. 9, the second guide rod 292 in the state of the minimum pinion circumcircle A₁ is located around the space S formed at the radial direction inner side of the second teeth portion 22b, which is the retarded angle side of the base portion 213. More specifically, the second guide rod 292 is located at a slightly retarded angle side with respect to the space S. Here, the second guide rod 292 in the state of the minimum pinion circumcircle A₁ could be located in the space S of the radial direction inner side with respect to the second teeth portion 22b. In this case, a cutting amount of the retarded angle side of the base portion 213 is increased, and shapes of the radial slots 14 and 192 are formed so as to correspond to the cut portion of the base portion 213.

Therefore, each shape of the rod stationary radial slots 13 and 14 and the rod movable radial slots 191 and 192 is set so that the radial direction positions of the guide rods 291 and 292 are located at the above-described positions.

In the present embodiment, the first guide rod 291 and the second guide rod 292 are alternately arranged in the circumferential direction. More specifically, the second guide rod 292 and the first guide rod 291 are arranged in this order at a retarded angle side of the first pinion sprocket 210.

An arrangement of the guide rods 29 is not limited to the arrangement where two of the first and second guide rod are provided between two pinion sprockets 20. Further, the total number of the guide rod 29 is not limited to twelve. The more the guide rod 29 is provided, the more the composite sprocket 5 is brought close to a perfect circle, then this makes it possible for the variation in the distance between the chain 6 and the shaft center C₁ of the rotation shaft 1 to be smaller. However, in this case, especially when the number of the first guide rod 291 is increased, there is a possibility that the radius of the minimum pinion circumcircle A₁ will be enlarged. Further, this leads to increase in manufacturing cost and increase in weight due to increase in parts count. Thus, it is preferable to set the number of the guide rod 29 with consideration given to these defects.

### [1-5. Relative rotation drive mechanism]

The relative rotation drive mechanism 30 is a mechanism that mechanically interlocks the composite sprockets 5 and 5. This relative rotation drive mechanism 30 has, has, in addition to the above first cam groove 15a formed in the first rotation portion 15 and the above second cam groove 16a formed in the second rotation portion 16, a cam roller 90 that is disposed in a first intersection position CP₁ where the first cam groove 15a and the second cam groove 16a intersect with each other, a shift fork 35 that moves the cam roller 90 in the axial direction and an axial direction movement mechanism 31 that moves the shift fork 35 in the axial direction.

In the following description, the cam roller 90, the shift fork 35 and the axial direction movement mechanism 31 will be explained in this order.

As shown in Figs. 2 and 7, the cam roller 90 is cylindrical in shape. The cam roller 90 has an axis that is orthogonal to the shaft center C1 of the rotation shaft 1, and is inserted in the first cam groove 15a and the second cam groove 16a at the first intersection position CP₁ where the first cam groove 15a and the second cam groove 16a intersect with each other (only one of them is denoted by a reference sign 90, 15a, 16a and CP₁). Therefore, the cam roller 90 rotates on the shaft center C₁ of the rotation shaft 1 in concert with the rotation of the rotation shaft 1. Here, a bearing 91a is fitted onto an outer periphery of the cam roller 90 in a position corresponding to the first cam groove 15a. Likewise, a bearing 91b is fitted onto an outer periphery of the cam roller 90 in a position corresponding to the second cam groove 16a.

The cam roller 90 has one end 90a that protrudes from the first intersection position CP₁ toward a radial direction outer side.

Here, as necessary, a fall-out preventing process is carried out for the cam roller 90 in order for the cam roller 90 not to fall out from the cam grooves 15a and 16a, although this is not shown in the drawings. As the fall-out preventing process, for instance, a head portion is provided at the other end of the cam roller 90 or a fall-out preventing pin is added, thereby preventing a radial direction movement of the cam roller 90 while allowing an axial direction movement of the cam roller 90.

The shift fork 35 is provided so as to range or extend from one of the set of two composite sprockets 5, 5 to the other. Here, the shift fork 35 is formed into an eyeglasses shape when viewed from the axial direction.

This shift fork 3 5 has a ring-shaped cam roller supporting portion 35a (only one side cam roller supporting portion is denoted by a reference sign 35a) for each of the composite sprockets 5, 5 and a bridge portion 35b that connects both of the cam roller supporting portions 35a. The first cam groove 15a and the second cam groove 16a are located at a radial direction inner side of the cam roller supporting portion 35a.

Here, the shift fork 35 is a plate member parallel to the disks 10 and 19, and is arranged parallel to the disks 10 and 19 at an axial direction outer side of the disks 10 and 19 with respect to the chain 6.

The cam roller supporting portions 35a has a recessed groove portion 35c throughout an entire circumference of the radial direction inner side of the cam roller supporting portions 35a. The groove portion 35c has a depth corresponding to a protrusion length of the cam roller 90, and accommodates the one end 90a of the cam roller 90. That is, the groove portion 35c has a ring-shaped space whose radial direction length (depth) is the protrusion length of the cam roller 90.

In the groove portion 35c, a rolling member 35d (only one rolling member is denoted by a reference sign 35d) in rolling contact with the cam roller 90 is provided. This rolling member 35d is provided in order to prevent the cam roller 90 that rotates on the shaft center C₁ of the rotation shaft 1 from rotating on the axis of the cam roller 90 when the cam roller 90 contacts a side wall of the groove portion 35c. That is, the rolling member 35d is disposed at the cam roller supporting portions 35a that forms the side wall of the groove portion 35c. Here, a plurality of rolling members 35d are disposed throughout an entire circumference of the groove portion 35c. Drawings show, as an example, a case where a needle roller bearing isusedas the rolling member 35d. However, instead of the needle roller bearing, a ball bearing could be used.

The axial direction movement mechanism 31 has, in order to move the shift fork 35 in the axial direction, a motor 32, a movement conversion mechanism 33 that converts rotational motion of an output shaft 32a of the motor 32 into linear motion and a fork supporting portion 34 that supports the shift fork 35 and moves linearly by the movement conversion mechanism 33. As the motor 32, for instance, a stepping motor can be used.

The axial direction movement mechanism 31 will be explained below in order of the fork supporting portion 34 and the movement conversion mechanism 33.

The fork supporting portion 34 is formed into a cylindrical shape having a tubular shaft that is concentric with the output shaft 32a of the motor 32. The output shaft 32a of the motor 32 is inserted in the fork supporting portion 34.

The fork supporting portion 34 is provided, at an inner circumference thereof, with a female thread portion 34a into which a male screw portion 32b formed at the output shaft 32a of the motor 32 is screwed. The fork supporting portion 34 is also provided, at an outer circumference thereof, with a recessed fork groove 34b that is engaged with the bridge portion 35b of the shift fork 35.

The fork groove 34b has a width (an axial direction length) corresponding to a thickness (an axial direction length) of the bridge portion 35b of the shift fork 35. A middle part of the bridge portion 35b (a middle of the two composite sprockets 5, 5) is fitted to the fork groove 34b, then the fork supporting portion 34 and the bridge portion 35b of the shift fork 35 are fixedly connected to each other.

The movement conversion mechanism 33 has the male screw portion 32b of the output shaft 32a and the female thread portion 34a of the fork supporting portion 34. When the output shaft 32a rotates, the fork supporting portion 34 where the female thread portion 34a is formed moves in the axial direction by engagement of the male screw portion 32b and the female thread portion 34a. That is, the axial direction movement mechanism 31 converts the rotational motion of the motor 32 into the linear motion by the movement conversion mechanism 33, and by this linear motion, moves the fork supporting portion 34 linearly in the axial direction.

The relative rotation drive mechanism 30 including the above shift fork 35 and the above axial direction movement mechanism 31 is provided with the relative rotation drive mechanism 30 shifted from the pinion sprockets 210, 220 and 230 in the axial direction.

In the following description, a relative rotation drive of the movable disk 19 with respect to the stationary disk 10 by the relative rotation drive mechanism 30 will be explained.

When the fork supporting portion 34 moves linearly in the axial direction by the axial direction movement mechanism 31, the shift fork 35 fixedly connected to the fork supporting portion 34 moves integrally with the fork supporting portion 34 in the axial direction, and by and according to this movement, the cam roller 90 also moves in the axial direction.

When the cam roller 90 disposed in the first intersection position CP₁ where the first cam groove 15a and the second cam groove 16a intersect with each other moves in the axial direction, the first intersection position CP₁ also moves in the axial direction. Since the first rotation portion 15 provided with the first cam groove 15a rotates integrally with the rotation shaft 1 and the stationary disk 10, when the first intersection position CP₁ moves in the axial direction, the second rotation portion 16 provided with the second cam groove 16a rotates relatively with respect to the first rotation portion 15.

Since the second rotation portion 16 rotates integrally with the movable disk 19 and the first rotation portion 15 rotates integrally with the stationary disk 10, when the second rotation portion 16 rotates relatively with respect to the first rotation portion 15, the movable disk 19 rotates relatively with respect to the stationary disk 10.

### [1-6. Sprocket movement mechanism and Rod movement mechanism]

Next, the sprocket movement mechanism 40A and the rod movement mechanism 40B will be explained with reference to Figs. 2 and 5A to 5C.

The sprocket movement mechanism 40A moves the pinion sprockets 20 as anobj ect of the movement. The rodmovement mechanism 40B moves the guide rods 29 as an object of the movement. The rod movement mechanism 40B has a first rod movement mechanism 401 that moves the first guide rods 291 as an object of the movement and a second rod movement mechanism 402 that moves the second guide rods 292 as an object of the movement.

These movement mechanisms 40A and 40B (401, 402) are mechanisms that move the respective objects of the movement in the radial direction in synchronization with each other.

The sprocket movement mechanism 40A is formed from the stationary disk 10, the movable disk 19 and the relative rotation drive mechanism 30 (see Figs. 2 and 7). Likewise, the rod movement mechanism 40B is formed from the stationary disk 10, the movable disk 19 and the relative rotation drive mechanism 30. As mentioned above, the configurations of the movement mechanisms 40A and 40B are different in only the object of the movement, and other configurations are the same.

Next, movement by the movement mechanisms 40A and 40B will be explained with reference to Figs. 5A to 5C.

Fig. 5A shows a phase of the movable disk 19 with respect to the stationary disk 10 in the state of the minimum pinion circumcircle A₁. At this time, a second intersection position CP₂ where the sprocket stationary radial slot 11 and the sprocket movable radial slot 19a intersect with each other is closest to the shaft center C₁ of the rotation shaft 1.

Likewise, a third intersection position CP₃ where the first rod stationary radial slot 13 and the first rod movable radial slot 191 intersect with each other, and a fourth intersection position CP₄ where the second rod stationary radial slot 14 and the second rod movable radial slot 192 intersect with each other, are closest to the shaft center C₁ of the rotation shaft 1. This fourth intersection position CP₄ is positioned at a radial direction inner side with respect to the third intersection position CP₃. This corresponds to a configuration in which, in the state of the minimum pinion circumcircle A₁, the second guide rod 292 is disposed at a radial direction inner side with respect to the first guide rod 291.

When a rotation phase of the movable disk 19 is changed with respect to the stationary disk 10 by the relative rotation drive mechanism 30, each of the intersection positions CP₂, CP₃ and CP₄ moves away from the shaft center C₁ of the rotation shaft 1 in synchronization with each other, in order of Fig. 5B, Fig. 5C.

In this manner, the sprocket movement mechanism 40A moves each pinion sprocket 20 supported in the second intersection position CP₂ in the radial direction in synchronization with each other while maintaining an equidistance of each of the pinion sprockets 20 from the shaft center C₁ of the rotation shaft 1. Likewise, the first rod movement mechanism 401 moves each first guide rod 291 supported in the third intersection position CP₃ in the radial direction in synchronization with each other while maintaining an equidistance of each of the first guide rods 291 from the shaft center C₁ of the rotation shaft 1. Also, likewise, the second rod movement mechanism 402 moves each second guide rod 292 supported in the fourth intersection position CP₄ in the radial direction in synchronization with each other while maintaining an equidistance of each of the second guide rods 292 from the shaft center C₁ of the rotation shaft 1 and while maintaining the substantially same diameter (the substantially same radius) as that of the first guide rod 291 in a state except the minimum pinion circumcircle A₁ and its vicinity.

On the other hand, when a direction of the rotation phase of the movable disk 19 is changed to an opposite direction to the above direction of the rotation phase of the movable disk 19 by the relative rotation drive mechanism 30, a moving direction of each of the pinion sprocket 20 and the guide rod 29 is reversed, and the pinion sprocket 20 and the guide rod 29 move closer to the shaft center C₁ of the rotation shaft 1.

### [2. Working and Effect]

The transmission mechanism according to the embodiment of the present invention is configured as described above. Therefore, the following working and effect can be obtained.
(1) The teeth portion 212 of the pinion sprocket 20 is provided along the circumference of the minimum pinion circumcircle A₁. Therefore, as compared with a pinion sprocket having a conventional sprocket gear shape, the number of teeth meshing with the chain 6 is secured at the teeth portion 212 of the pinion sprocket 20. Further, as compared with the pinion sprocket having the sprocket gear shape, a size of the teeth portion 212 can be large. It is thus possible to lighten a load to the teeth portion 212 meshing with the chain 6. Consequently, torque can surely be transmitted.
   Further, in the state of the minimum pinion circumcircle A₁, since the teeth portion 212 of the pinion sprocket 20 is arranged along the circumference of the minimum pinion circumcircle A₁, the mesh between the teeth portion 212 and the chain 6 can be stable, thereby surely transmitting the torque.
(2) In a case where the teeth portion 212 is provided along the circumference of the minimum pinion circumcircle A₁ and the sprocket stationary radial slot 11 is provided so that its position is shifted to the retarded angle side with respect to the first radial direction Dᵣ₁ as the sprocket stationary radial slot 11 extends toward the outer circumference of the stationary disk 10, i.e. the sprocket stationary radial slot 11 is provided so as to lean or incline with respect to the first radial direction Dᵣ₁, a position of the teeth portion 212 of the pinion sprocket 20 with respect to the circumference of the pinion circumcircle A is geometrically fixed as follows.
   As the pinion circumcircle Abecomes greater, a position, located at a more advanced angle side with respect to an intersection position between the second radial direction Dᵣ₂ and the circumference of the pinion circumcircle A, of the teeth portion 212 of the pinion sprocket 20 is separated from the circumference of the pinion circumcircle A. Especially in the state of the maximum pinion circumcircle A₂, as shown by a chain line in Fig. 9, a position, located at a more advanced angle side, of the teeth portion 212 of the pinion sprocket 20 (in particular, a position of a right end tooth of the first teeth portion 22a which is positioned at the advanced angle side, in Fig. 9) is separated from the circumference of the maximum pinion circumcircle A₂.
   Therefore, in a case of a pinion sprocket having symmetrical teeth portions disposed toward the advanced angle side and the retarded angle side with respect to the direction Dₛ₁ in which the sprocket stationary radial slot 11 extends, especially the teeth portion at the advanced angle side is separated from the circumference of the pinion circumcircle A.
   The reason why the position of the teeth portion 212 with respect to the circumference of the pinion circumcircle A is fixed in this way is because in a case where a center of the minimum pinion circumcircle A₁ is shifted along the second radial direction Dᵣ₂, the circumference of the minimum pinion circumcircle A₁ circumscribes the circumference of the pinion circumcircle A at the intersection position where the second radial direction Dᵣ₂ and the circumference of the pinion circumcircle A intersect with each other.
   In contrast to this, in the transmission mechanism of the present embodiment, the teeth portion 212 of the pinion sprocket 20 has the first teeth portion 22a positioned in the slot width of the sprocket stationary radial slot 11 and the second teeth portion 22b extending from this first teeth portion 22a to the retarded angle side. Therefore, even in the case of the maximum pinion circumcircle A₂, the second teeth portion 22b tends to be arranged along the circumference of the maximum pinion circumcircle A₂. As a consequence, the mesh between the second teeth portion 22b and the chain 6 can be stable regardless of the size of the pinion circumcircle A, thereby surely transmitting the torque.
   In addition, since the stationary radial slots 11 and 12 of the stationary disk 10 are provided so as to lean or incline with respect to the radial direction, each intersection angle between the stationary radial slots 11 and 12 and the movable radial slots 19a and 19b of the movable disk 19 can be easily secured. Thus, a rotation torque of the movable disk 19 with respect to the stationary disk 10 for the radial direction movement of the pinion sprocket 20 and the guide rod 29 can be reduced. It is then possible to suppress snags (sticks) of the supporting portions 216 and 217 of the pinion sprocket 20 and snags (sticks) of the rod supporting shaft 29a of the guide rod 29 in the stationary radial slots 11 and 12 and the movable radial slots 19a and 19b.
(3) The second teeth portion 22b extends, with respect to the first teeth portion 22a, up to the area of the second radial direction Dᵣ₂ that is parallel to the direction Dₛ₁ in which the sprocket stationary radial slot 11 extends. Therefore, the second teeth portion 22b is provided at the intersection position where the second radial direction Dᵣ₂ and the circumference of the pinion circumcircle A intersect with each other, and the second teeth portion 22b can be positioned along the circumference of the pinion circumcircle A regardless of the radius of the pinion circumcircle A, thereby surely transmitting the torque.
(4) The sprocket stationary radial slot 11 is provided so that its position is shifted to the retarded angle side with respect to the first radial direction Dᵣ₁ as the sprocket stationary radial slot 11 extends toward the outer circumference of the stationary disk 10. Therefore, a part of the reaction force (component of force) against the driving torque can act on the pinion sprocket 20 toward a radial direction outer side of the direction Dₛ₁ in which the sprocket stationary radial slot 11 extends. That is, during transmission of the driving torque, by the fact that a force that moves the pinion sprocket 20 to the radial direction outer side acts on the pinion sprocket 20, slack of the chain 6 can be suppressed, and backlash or play of each mechanism in the transmission mechanism can be suppressed.
(5) The first supporting portion 216 is formed into such a shape that the first supporting portion 216 contacts the sprocket stationaryradial slot 11 throughout the predetermined length in the radial direction of the first supporting portion 216. Therefore, when a rotation force that attempts to rotate the pinion sprocket 20 acts on the pinion sprocket 20, the first supporting portion 216 avoids the rotation of the pinion sprocket 20 with respect to the sprocket stationary radial slot 11 by reaction (counteraction) against this rotation force.
(6) The guide rod 29 has the first guide rod 291 guiding the chain 6 and the second guide rod 292 positioned at the radial direction inner side with respect to the first guide rod 291 in the state of the minimum pinion circumcircle A₁. It is therefore possible to avoid interference between the second guide rod 292 and the first guide rod 291 or between the second guide rod 292 and the pinion sprocket 20 in the state of the minimum pinion circumcircle A₁. Thus, the radius of the minimum pinion circumcircle A₁ can be further small. As a consequence, a long radial direction movement distance of the pinion sprocket 20 can be secured, thereby expanding a ratio coverage. At this time, since the chain 6 is guided by the first guide rod 291, the variation of the winding radius of the chain 6 can be suppressed. A stable power transmission can therefore be achieved, and quiet operation or performance can be obtained.
   At least in the state of the maximum pinion circumcircle A₂, the distance of the first guide rod 291 from the shaft center C₁ of the rotation shaft 1 and the distance of the second guide rod 292 from the shaft center C₁ of the rotation shaft 1 are equal to each other. That is, in the state of the maximum pinion circumcircle A₂, both rods of the guide rod 29 guide the chain 6. It is therefore possible to guide the chain 6 by all of (both of) the first guide rod 291 and the second guide rod 292. That is, in the state of the maximum pinion circumcircle A₂ in which a length of the chain 6 becomes longest, the number of the guide rods 29 guiding the chain 6 can be secured, thereby effectively suppressing the variation of the winding radius of the chain 6.
(7) The second guide rod 292 in the state of the minimum pinion circumcircle A₁ is located around the space S formed at the radial direction inner side of the second teeth portion 22b, which is the retarded angle side of the base portion 213. Since it can be said that this space S is a space formed by extending the second teeth portion 22b from the first teeth portion 22a, the space S is unique to the transmission mechanism of the present invention. The second guide rod 292 can be accommodated (retracted) using the space S. That is, in the transmission mechanism of the present invention, the space S that might be a so-called dead space can be utilized effectively as an accommodation space of the second guide rod 292 in the state of the minimum pinion circumcircle A₁. Further, if the second guide rod 292 in the state of the minimum pinion circumcircle A₁ is located in the space S, the space S can be utilized more effectively as the accommodation space of the second guide rod 292.
(8) The first guide rod 291 and the second guide rod 292 are alternately arranged in the circumferential direction. It is therefore possible to efficiently accommodate the second guide rod 292 at the radial direction inner side in the state of the minimum pinion circumcircle A₁.

### [Others]

Although the present invention has been explained on the basis of the embodiment above, the present invention is not limited to the embodiment described above. Configuration or structure in the above embodiment includes all design modifications and equivalents belonging to the technical scope of the present invention. Each configuration or structure in the above embodiment can be omitted, selected and combined, as necessary.

In the above embodiment, the stationary radial slots 11 and 12 are provided so as to lean or incline to the retarded angle side. However, the stationary radial slots 11 and 12 could be provided so as to lean or incline to the advanced angle side. In this case, the second teeth portion is provided so as to extend from the first teeth portion to the advanced angle side. In the case of this configuration, although it is difficult to suppress the slack of the chain 6 and the backlash or the play because a part of the reaction force (component of force) against the driving torque can act on the pinion sprocket 20 toward a radial direction inner side of the direction Dₛ₁ in which the sprocket stationary radial slot 11 extends, at least each intersection angle between the stationary radial slots 11 and 12 and the movable radial slots 19a and 19b of the movable disk 19 can be easily secured.

Further, in the above embodiment, the stationary radial slots 11 and 12 are formed linearly. However, the stationary radial slots 11 and 12 could have other shape such as a curved shape or a polygonal line shape.

Moreover, the guide member 29b of the guide rod 29 could be omitted. That is, it is possible to form the guide rod 29 by the rod supporting shaft 29a. In this case, the minimum pinion circumcircle can be small, thereby contributing the expansion of the ratio coverage.

## Claims

1. A transmission mechanism that changes a transmission ratio, comprising:
a set of two composite sprockets each having:
a rotation shaft that inputs or outputs power;
a plurality of pinion sprockets, each of which is supported movably in a radial direction with respect to the rotation shaft; and
a movement mechanism that moves the plurality of pinion sprockets in the radial direction in synchronization with each other while maintaining equidistance of each of the pinion sprockets from a shaft center of the rotation shaft; and
a chain wound around the set of two composite sprockets, the transmission ratio being changed by changing a circumcircle radius that is a radius of a circle that encircles all of the plurality of pinion sprockets and circumscribes all of the plurality of pinion sprockets, and
the pinion sprocket being formed into a sector gear shape having a teeth portion that is arranged along a circumference of the circumcircle of a case where the circumcircle radius is a minimum and meshes with the chain.

2. The transmission mechanism as claimed in claim 1, wherein:
the movement mechanism has:
a stationary disk on which a plurality of stationary radial slots are formed and which rotates integrally with the rotation shaft, the stationary radial slot being configured so that a supporting member of each of the pinion sprockets is inserted in the stationary radial slot and so that a position of the stationary radial slot is shifted to one side of a retarded angle side or an advanced angle side with respect to the radial direction as the stationary radial slot extends toward an outer circumference of the stationary disk; and
a movable disk on which a plurality of movable radial slots are formed and which is arranged concentrically with the stationary disk and is rotatable with respect to the stationary disk, the movable radial slot being configured so that the supporting member of each of the pinion sprockets is positioned at an intersection position where the stationary radial slot and the movable radial slot intersect with each other when viewed from an axial direction, and
the teeth portion has a first teeth portion, at least one tooth of which is positioned in a slot width of the stationary radial slot, and a second teethport ion which extends from the first teeth portion to the one side of the retarded angle side or the advanced angle side.

3. The transmission mechanism as claimed in claim 1 or 2, wherein:
the stationary radial slot is formed linearly, and
the second teeth portion extends, with respect to the first teeth portion, up to an area of a radial direction that passes through the shaft center of the rotation shaft and is parallel to a direction in which the stationary radial slot extends.

4. The transmission mechanism as claimed in any one of the preceding claims 1 to 3, wherein:
the stationary radial slot is provided so that a position of the stationary radial slot is shifted to the retarded angle side with respect to the radial direction as the stationary radial slot extends toward the outer circumference of the stationary disk.

5. The transmission mechanism as claimed in any one of the preceding claims 1 to 4, wherein:
the supporting member of each of the plurality of pinion sprockets is formed into such a shape that the supporting member contacts the stationary radial slot throughout a predetermined length in a radial direction of the supporting member.

6. The transmission mechanism as claimed in any one of the preceding claims 1 to 5, further comprising:
guide rods that guide the chain, and wherein
each of the guide rods has:
a first guide rod that guides the chain all the time regardless of a size of the circumcircle radius; and
a second guide rod that guides the chain at least when the circumcircle radius is a maximum, and is positioned at a radial direction inner side with respect to the first guide rod when the circumcircle radius is the minimum.

7. The transmission mechanism as claimed in claim 5 or 6, wherein:
the second guide rod is located in or around a space formed at a radial direction inner side of the second teeth portion when the circumcircle radius is the minimum.

8. The transmission mechanism as claimed in any one of the preceding claims 5 to 7, wherein:
the first guide rod and the second guide rod are alternately arranged in a circumferential direction.
